# EUROPEAN PATENT SPECIFICATION

(11) **EP 1 561 146 B1**
(45) Date of publication and mention of the grant of the patent: **28.07.2010**
(21) Application number: 03783633.5
(22) Date of filing: 14.11.2003
(51) Int. Cl.: G02B 5/30, G02B 27/28, G02F 1/1335, H04N 9/31, G02F 1/13363

(54) **THREE-PANEL COLOR MANAGEMENT SYSTEMS AND METHODS**
DREITAFELFARBVERWALTUNGSSYSTEME UND VERFAHREN
PROCEDES ET SYSTEMES DE GESTION DE COULEURS A TROIS PANNEAUX

(30) Priority: 14.11.2002 US 294426
(43) Date of publication of application: 10.08.2005
(73) Proprietor: RealD Inc., Beverly Hills, CA 90210 (US)
(72) Inventor: CHEN, Jainmin, Superior, CO 80027 (US); ROBINSON, Michael, G., Boulder, CO 80303 (US); SHARP, Gary, D., Boulder, CO 80302 (US); BIRGE, Jonathan, R., Cambridge, MA 02138 (US)
(74) Representative: Beck, Simon Antony
(86) International application number: PCT/US2003/036803
(87) International publication number: WO 2004/046787

(56) References cited:
- EP-A- 1 143 744
- US-A1- 2002 001 135
- US-A1- 2002 051 100
- US-A1- 2002 080 287
- US-B1- 6 183 091
- US-B1- 6 375 330
- US-B1- 6 384 972
- US-B1- 6 419 362
- SHARP G ET AL: "LCoS projection color management using retarder stack technology" DISPLAYS, ELSEVIER SCIENCE PUBLISHERS BV., BARKING, GB, vol. 23, no. 3, June 2002 (2002-06), pages 139-144, XP004357156 ISSN: 0141-9382
- ROSENBLUTH A E ET AL: "Correction of contrast in projection systems by means of phase-controlled prism coatings and band-shifted twist compensators" PROCEEDINGS OF THE SPIE, SPIE, BELLINGHAM, VA, US, vol. 3954, 2000, pages 63-90, XP002397254 ISSN: 0277-786X
- ROSENBLUTH A E ET AL: "CONTRAST PROPERTIES OF REFELCTIVE LIQUID CRYSTAL LIGHT VALVES IN PROJECTION DISPLAYS" IBM JOURNAL OF RESEARCH AND DEVELOPMENT, INTERNATIONAL BUSINESS MACHINES CORPORATION, NEW YORK, NY, US, vol. 42, no. 3/4, 1998, pages 359-386, XP000885154 ISSN: 0018-8646

## Description

### Field of the Invention

The present invention relates generally to color management in projection displays and, more particularly, to color management architectures for three-panel projection systems that utilize color selective polarization filters (CSPF) and polarizing beam splitting (PBS) elements.

### Background

It is generally desirable for projection systems to produce high quality images while being compact and inexpensive. In prior art transmissive systems using polysilicon liquid crystal panels, high contrast is achieved by situating each panel between crossed sheet polarizers. Color management beam splitters/combiners and other optics are external to these units, insuring that polarization is not contaminated and contrast degraded.

In projection systems using reflective panels, such as liquid crystal on silicon (LCOS) displays, beam routing is frequently accomplished using polarizing beam splitters. PBSs are four-port devices, comprising an input port, an output port, and a reflective panel port, with the fourth port typically unused. The behavior of thin-film PBS cubes, for instance, is such that s-polarized light is reflected, while orthogonal, p-polarized light is substantially transmitted.

A number of four-panel or "quad" architectures have been described in prior applications such as U.S. Patent Application Serial Nos 09/736,105, and 10/294,426, for the separation, modulation, and re-combination of three primary colours. These functions may be accomplished using new architectures for colour management that are described in the present application.

US2002/0051100 discloses a colour management system in which light from a light source is directed towards a dichroic mirror. Blue light is reflected towards a polarising beam splitter. Red and green light is transmitted by the mirror and enters a second polarising beam splitter. Liquid crystal display panels modulate the light beams. The modulated beams are combined and projected onto a screen.

EP 1143744 seems similar to the above mentioned US application.

### Summary

According to a first aspect of the present invention there is provided a colour management architecture as claimed in claim 1.

According to a second aspect of the present invention there is provided a method as claimed in claim 8.

Embodiments of the present invention relate to colour management architectures in video projection systems. Specifically, the described architectures employ three polarizing beamsplitter cubes (PBSs) and a dichroic beamsplitter to achieve colour separation and recombination of red, green and blue primary colour bands to illuminate and project light from three reflective video display panels. Colour separation and recombination with the PBSs is a achieved through polarization encoding of the separate colour bands by colour selective polarization filters. These architectures further provide for systems in which the constituent PBSs are used to analyse the reflected light and which do not require external polarizing elements for light analysis. Two of the three display panels are analysed in transmission by their neighbouring PBSs, whereas the third panel, which shares a PBS with another, is analysed in transmission by the output PBS.

For the above-described colour management architectures, the three display panels are placed in an 'L' shaped three cube assembly whose output port is defined. Unlike prior three-panel/three-PBS architectures, which "notch" out the green spectrum from between the red and blue spectrums for individual manipulation by PBS display panel couplet, *see, e.g.,* U.S. Patent Application no. 2002/0001135, certain of the present architectures separate either blue or red first, leaving colours from adjacent wavelength bands to be manipulated between two panels by a single PBS. To accomplish this management of adjacent colour bands through a single PBS, the present application recognizes the ability to mismatch colour selective bands through a single PBS, the present application recognises the ability to mismatch colour selective polarisation filters to avoid colour cross-talk in the region between the adjacent colour bands. This allows blue light, for example to be treated separately to improve its contrast, which is an advantage because in many colour management systems, blue constrast is often the most difficult to control. Other advantages of routing colour of adjacent wavelength bands to be manipulated between two panels by a single PBS include being able to tailor more effectively the PBS performance to the colour bands that are then continuous in wavelength.

In addition to the adjacent colour management techniques described above, the present invention can incorporate skew-ray compensating filters, such as described in commonly owned U.S. Patent Appl. No. 10/000,227. The use of these skew-ray compensating filters in the disclosed, particularly between adjacent PBSs and particularly in physically compact, high angle illumination (low f/#) implementations, can increase performance.

### Brief Description of the Drawing

FIGURE 1 shows an exemplary prior art "quad" colour management system;
FIGURE 2A shows an exemplary colour management architecture not constituting an embodiment of the invention unless O plate compensators are included therein for a projection system that includes a dichroic input beam splitter with polarizers;
FIGURE 2B shows the exemplary projection device 1300 of FIGURE 2A with optional additional trim filters in place of polarizers and not constituting an embodiment of the invention unless O plate compensators are included therein;
FIGURE 2C shows the exemplary projection device 1300 of FIGURE 2A with combination of polarizers and extra trim dichroic filters and not constituting an embodiment of the invention unless O plate compensators are included therein;
FIGURE 3 illustrates a projection device not constituting an embodiment of the invention unless O plate compensators are included therein that includes a dichroic input beam splitter with an output quarter-wave plate to compensate for reflection from a projection lens;
FIGURE 4 is an exemplary variation of the projection device shown in FIGURE 3 including extra trim dichroic filters, and not constituting an embodiment of the invention unless O plate compensators are included therein;
FIGURE 5 is another exemplary variation of the projection device shown in FIGURE 3 with a magenta/green filter for the yellow port and not constituting an embodiment of the invention unless O plate compensators are included therein;
FIGURE 6 illustrates a variation of the projection device shown in FIGURE 3 with o-plates for skew ray compensation and constituting an embodiment of the present invention; and
FIGURE 7 shows an exemplary variation of the projection device of FIGURE 3 with light input at 90 degrees, but not constituting an embodiment of the invention unless O plate compensators are included therein.

### Detailed Description

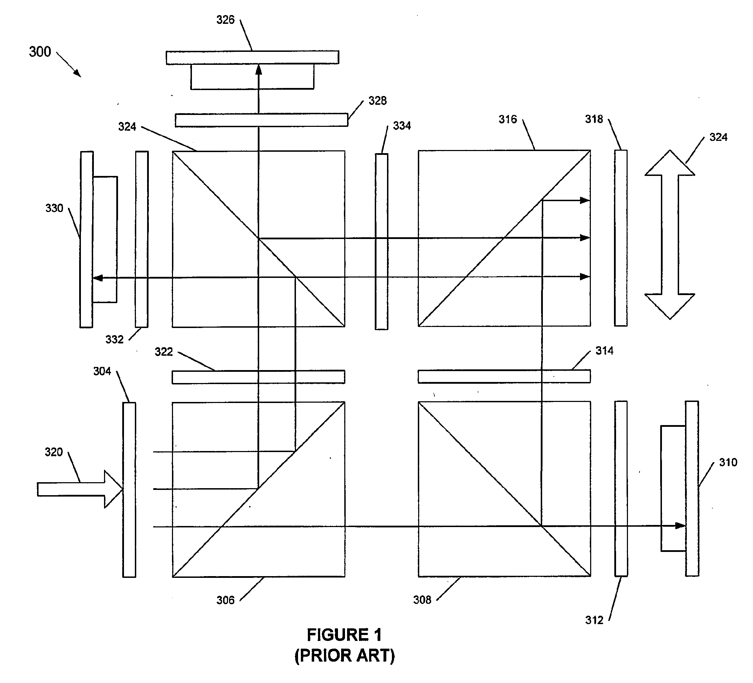

**FIGURE 1** shows an exemplary prior art "quad" color management system 300. In the system 300, an s-polarized white light 302 is incident on a first CSPF 304 that converts light of a first spectrum to the orthogonal polarization that is subsequently transmitted through the first PBS 306. Light that is complementary to the first spectrum remains spolarized and is subsequently reflected by the first PBS 306. Light having the first spectrum is then transmitted by a second PBS 308 and is subsequently incident upon a first reflective panel 310, which includes an optional quarter-wave plate 312. In the ON-state, light reflected from the first reflective panel 310 is converted from p-polarization to s-polarization, thereby enabling the second PBS 308 to reflect the light through a first O-oriented half-wave plate 314. The light is then reflected by a third PBS 316. The third PBS 316 reflects the first spectrum into a second CSPF 319, which converts light of the first spectrum to polarization, which it is then analyzed by a clean-up polarizer 324.

The incident light of a second and third spectrums is reflected by the first PBS 306 onto a first compensating color selective polarization filter (CCSPF) 322, which reflects the state of polarization (SOP) of the second spectrum about a ±π/4 axis. Light of the second spectrum is transmitted through a fourth PBS 324 to a second reflective panel 326, which includes an optional quarter-wave plate 328. The first CCSPF 322 retains the SOP of the third spectrum. The third spectrum is subsequently reflected by the fourth PBS 324 to a third reflective panel 330, which includes an optional quarter-wave plate 332. In ON-state, light reflected from the second and third reflective panels 326, 330 returns to the PBS 324 with orthogonal states, so that light in the second and third spectra is incident on a second CCSPF 334. The second CCSPF 334 reflects the SOP of the second spectrum about a ±π/4 axis, thus restoring both spectra to p-polarization. The p-polarized light is then transmitted by the third PBS 316, the second CSPF 318 and the clean-up polarizer 324. The optional quarter-wave plates situated between each panel and PBS are configured to provide skew ray correction.

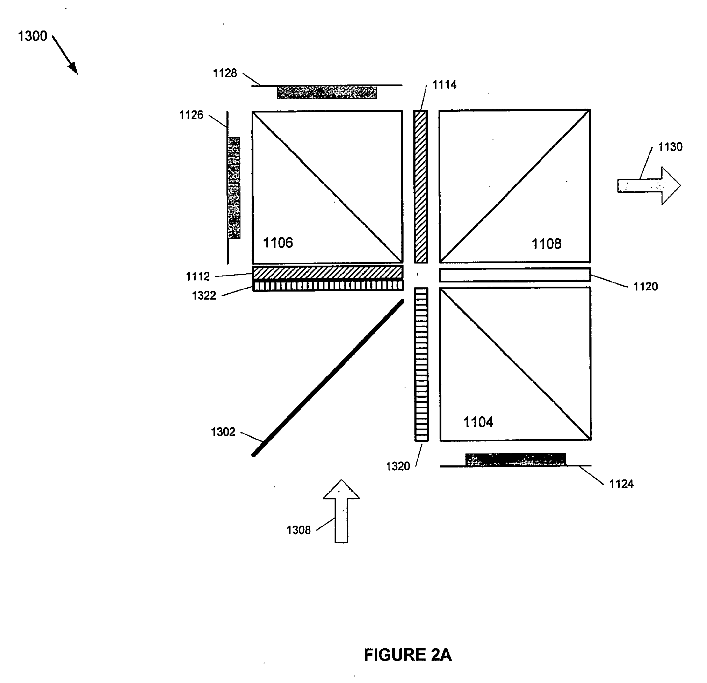

**FIGURE 2A** illustrates an exemplary color management architecture for a projection device 1300. The projection device 1300 includes a dichroic input beam splitter 1302 and three PBSs 1104,1106, and 1108. The PBS may be conventional cube PBSs, Moxtek wire grid polarizers, or any other suitable PBS. The projection device 1300 further includes a first CSP 1112 placed between the dichroic input beam splitter 1302 and the PBS 1106, a second CSP 1114 placed between the PBSs 1106 and 1108, a half-wave plate 1120 orientated at 45° placed between the PBSs 1104 and 1108. A first reflective panel 1122, a second reflective panel 1124, and a third reflective panel 1126 are configured to modulate a polarized input light beam 1128 to produce an output light beam 1130. All panels can include compensating elements such as quarter-wave plate.

The projection device 1300 further includes polarizers 1320 and 1322 at the output ports of the dichroic input beam splitter 1302. In one embodiment, the half-wave plate 1120 can be configured to rotate the polarization of the light modulated and reflected by the reflective panel 1124. In some embodiments, a color filter can be added to the half-wave plate 1120. Alternatively, the color filter can substitute the half-wave plate 1120.

The input light beam 1128 can be polarized or unpolarized and may be generated by any suitable light source, including, but not limited to an ultra-high pressure mercury (UHP) lamp, a xenon lamp, a fusion lamp, a light source according to application 60/358,517, which is incorporated herein in its entirety by this reference, or any other suitable light source. The light source also may include suitable illumination optics. The input light beam 1128 is incident upon the dichroic input beam splitter 1302, which reflects light of a first spectrum and transmits light of a second spectrum.

The reflected first spectrum of light is then incident upon the PBS 1104, which reflects and directs the first spectrum of light to be incident upon the reflective panel 1124. The reflective panel 1124 modulates and reflects the first spectrum of light. The modulated first spectrum of light then travels through the PBS 1104 and the half-wave plate 1120 oriented at 45°. The half-wave plate 1120 rotates the polarization of the modulated first spectrum of light to the orthogonal polarization direction such that the PBS 1108 will reflect the modulated first spectrum of light. The PBS 1108 reflects and directs the modulated first spectrum of light to form part of the output light beam 1130. The output light beam may be projected by any suitable projection optics or may otherwise be imaged for display.

The second spectrum of light, which is transmitted through the dichroic input beam splitter 1302, is incident upon the polarizer 1322 and the CSP 1112. The CSP 1112 rotates part of the second spectrum such that the PBS 1106 will reflect a first portion of the second spectrum of light to the reflective panel 1124 and allow a second portion of the second spectrum of light to be transmitted through the PBS 1106 to the reflective panel 1128. The reflective panel 1124 modulates and reflects the first portion of the second spectrum of light back through the PBS 1106 to the CSP 1114. The CSP 1114 does not rotate polarization of the light reflected from the reflective panel 1124 such that the light will be transmitted through the PBS 1108 and become part of the output light beam 1130. The reflective panel 1126 modulates and reflects the second portion of the second spectrum of light back into the PBS 1106, which reflects the light from the reflective panel 1126 toward the CSP 1114. The CSP 1114 rotates polarization of the light reflected from the reflective panel 1126 such that the light will be transmitted through the PBS 1108 and become part of the output light beam 1130. The CSP 1114 can be further configured to compensate the light reflected from the reflective panels 1126 and 1128 for skew rays.

The wavelengths of light in the transition region between the first and second portions of the second reflected light beam are defined in the absence of any external notch filtering by the transitions of filters 1112 and 1114. In the case where the second reflected beam has a continuous spectrum, e.g. the yellow 520-680nm band, the transition slopes of the individual filters 1112 and 1114 that separate the red wavelengths (>600nm) from those that are green (<570nm) should not overlap significantly (<10%) to avoid low contrast with transition light (∼570-600nm) always directed towards panel 1126. This implies that the yellow transition of the filter 1112 should be at a longer wavelength than that of filter 1114 in this exemplary case.

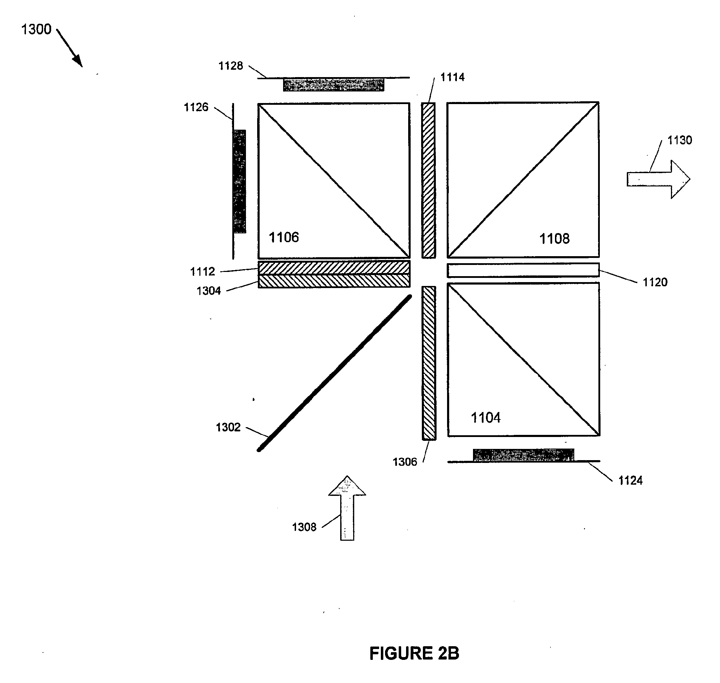

**FIGURE 2B** shows the exemplary projection device 1300 of FIGURE 2A with optional additional trim filters 1304 and 1306 in place of the polarizers 1320 and 1322 at the output ports of the dichroic input beam splitter 1302. The trim filters 1304 and 1306 improve the color saturation. The input light 1308 can be primarily of a single polarization state.

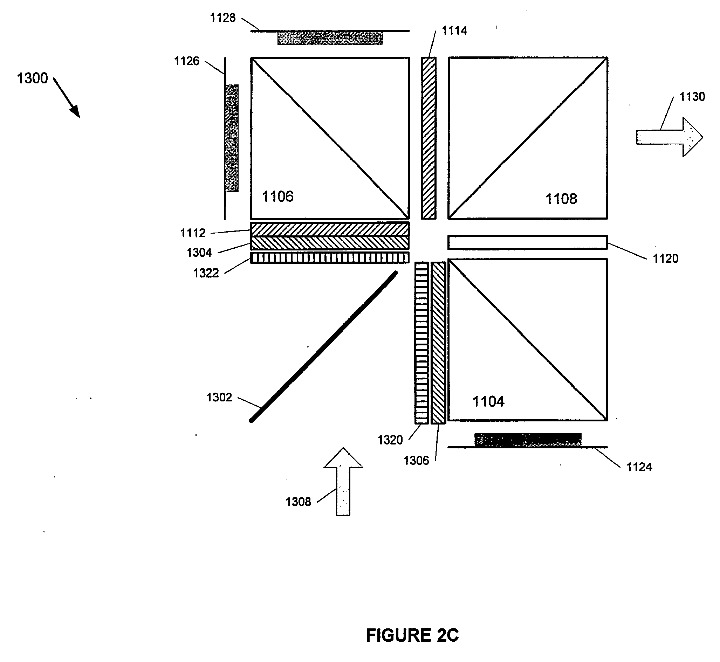

**FIGURE 2C** shows the exemplary projection device 1300 of FIGURE 2A that includes both the polarizers 1320 and 1322, and extra trim dichroic filters 1304 and 1306 at the output ports of the dichroic input beam splitter 1302.

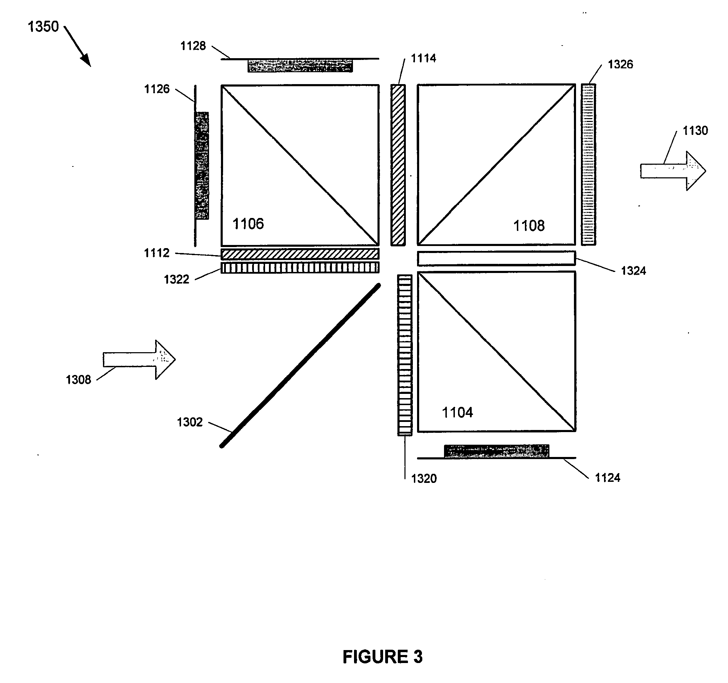

**FIGURE 3** illustrates a projection device 1350, which is an exemplary variation of the projection device 1300 shown and described in FIGURE 2. An input light 1308 enters into the projection device 1350 from the left side of the dichroic input beam splitter 1302. In the present example, the dichroic input beam splitter 1302 is configured to transmit the blue spectrum and reflect the yellow spectrum. However, the dichroic input beam splitter 1302 can be configured to reflect and transmit any desired combination of spectra. For projection devices with modest f-number, such as f/2.8, additional extra trim dichroics, such as 1304 and 1306, may not be necessary. In the present example, the projection device 1350 is configured for f/2.8. Typically, dichroic beam splitters, such as dichroic input beam splitter 1302, do not preserve the polarization of the input light. Thus, to preserve the polarization of the input light 1308 or to allow operation with unpolarized input light 1308, polarizers 1320 and 1322 are placed at the output ports of the dichroic beam splitter 1302. Additionally, the trim filters 1304 and 1306 can also be placed at the output ports of the dichroic input beam splitter 1302 such as shown in FIGURE 2C.

A red/cyan filter 1112 processes the reflected yellow spectrum. The red/cyan filter 1112 transforms the polarization state of red light while substantially maintaining that of cyan. A reflective panel 1128 modulates the red spectrum and a reflective panel 1126 modulates the green (and any blue) spectrum. A magenta/green filter 1114 transforms the polarization of red and green spectra at the output of the polarizing beam splitting element 1106, rotating the red (and any blue) light and leaving substantially unaffected the green light. An achromatic quarter-wave plate 1326 rotated at 45 degrees is placed at the output port of the polarizing beam splitting element 1108. A filter 1324 can be placed between the polarizing beam splitting elements 1104 and 1108. The filter 1324 rotates the polarization of the blue spectrum and does not affect the yellow spectrum. As explained below, filter 1324 functions in combination with a quarter-wave plate to improve the ANSI contrast. According to one embodiment, the quarter-wave plate 1326 can be achromatic over the visible spectrum.

"ANSI contrast," is a performance metric for comparing the contrast between a light part of a display and a dark part. The problem monitored with ANSI contrast measurement is the reflection back into a projection system of light from portions of a panel that correspond to bright areas in the display. Typically, the light coming off the bright areas of the panel can be reflected back into the projection device and light up the dark areas of the panel, which can result in increasing the intensity of the display's dark areas. One solution to avoid the unwanted reflections is to change the polarization of the reflected light. In the present example, when a part of the green panel is bright and a part of it is dark, the projected green light from the bright areas of the panel heads towards the projection lens (not shown) and is reflected back from the surfaces of elements within the projection lens. If the reflected green light has the same polarization as the incident light, then it travels back to the green panel where it can illuminate dark regions of the green panel with the incorrect polarization. This light can then be projected onto the screen, increasing the light level of the dark display regions and reducing ANSI contrast. To a viewer, low ANSI contrast results in a "washed out" appearance.

For example, to prevent green reflected light from hitting dark parts of any panel, the quarter-wave plate 1326 is able to alter the polarization of reflected light to be primarily s-polarized. This results in most of the green light being directed out of the system and away from any panel. When the projected green light exits the polarizing beam splitting element 1108, it is turned into predominantly circularly polarized light by the quarter-wave plate 1326. When the circularly polarized light is reflected off the projection lens and passes back through the quarter-wave plate 1326, the polarization of the reflected, opposite handedness predominantly circularly polarized light is changed to be substantially s-polarized. The s-polarized reflected light does not transmit through the output polarizing beam splitter 1108 and is reflected downwards towards the blue panel 1124. The filter 1324 is configured to rotate the polarization of the blue spectrum and leave green and red substantially unchanged. In the present example, the s-polarized reflected light is green light, thus, the filter 1324 does not rotate its polarization and the polarizing beam splitting element 1104 then prevents this s-polarized reflected light from striking the blue panel 1124. In this specific embodiment reflected red light is similarly prevented from striking a panel. Reflected blue light incident on panels can often be tolerated due to its relatively low perceived brightness. In the case where projection lenses are low in reflection the quarter wave may not be necessary and the filter 1324 may be replaced with a half-wave plate at 45 degrees.

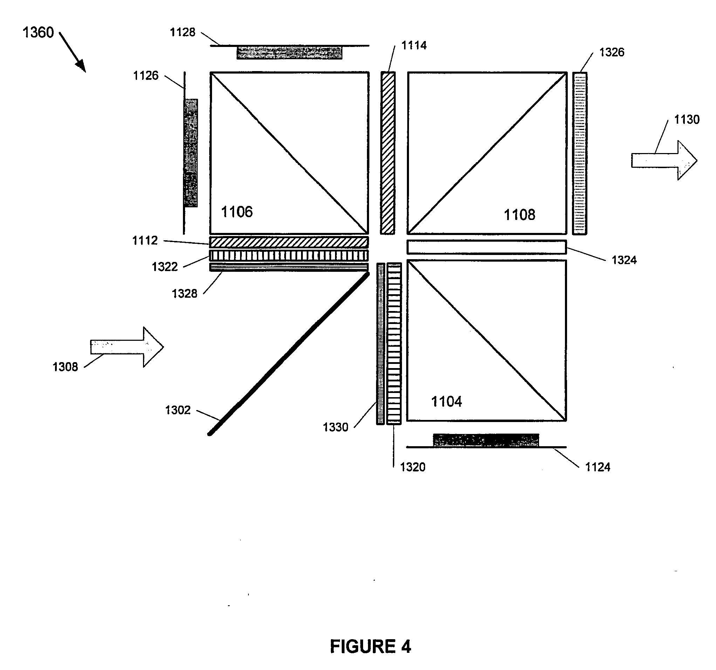

**FIGURE 4** illustrates a projection device 1360, which is an exemplary variation of the projection device 1350 shown in FIGURE 3. In the present example, the projection device 1360 is configured for an f-number that is less than or equal to f/2.8. Because of the low f-number and higher angles, the dichroic filter 1302 at the input begins to transmit some yellow and reflect some blue. Thus, to avoid color leakage at the output ports, additional extra trim dichroic filters 1328 and 1330 are added at the yellow and blue output ports of the dichroic beam splitter 1302 respectively. The extra trim dichroic filter 1328 can be configured to filter out the blue leakage in the yellow spectrum and the extra trim dichroic filter 1330can be configured to filter out yellow leakage in the blue spectrum.

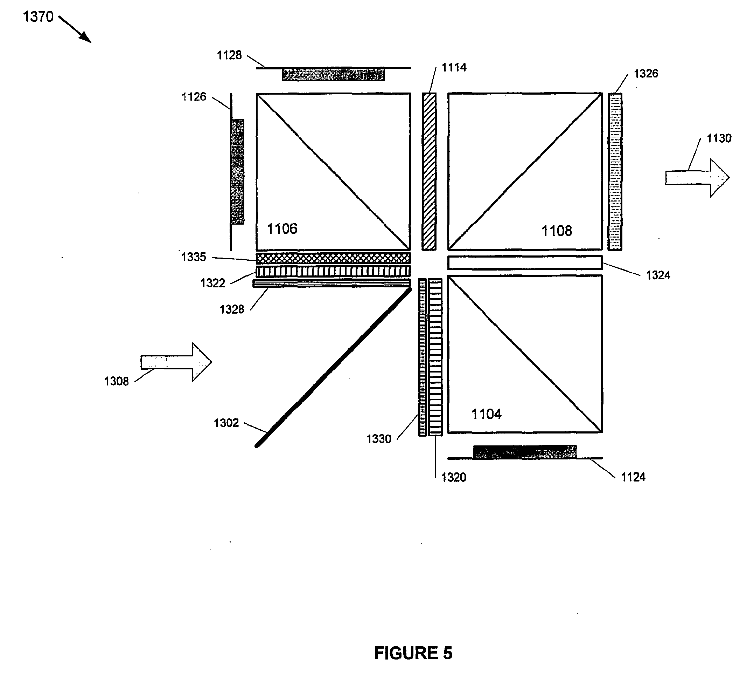

**FIGURE 5** shows a projection device 1370, which is yet another exemplary variation of the projection device 1350 shown in FIGURE 3. The projection device 1370 includes a magenta/green filter 1335 in the yellow output port of the dichroic beam splitter 1302. In the present example, the magenta/green filter 1335 replaces the red/cyan filter 1112 of the projection device 1350 of FIGURE 3. The magenta/green filter 1335 can improve the manufacturability and the cost of the projection device 1370. When the magenta/green filter 1335 is used in the projection device 1370, the extra trim dichroic filters 1328 and 1330 can be added at the output port of the dichroic beam splitter 1302. In the projection device 1350 of FIGURE 3, the dichroic beam splitter 1302 typically reflects some of the blue light. The red/cyan filter 1112 causes the reflected blue light to be reflected a second time by the polarizing beam splitter 1106, and the blue light heads to the green panel 1126.

The performance of the green panel 1126 does not noticeably degrade due to the blue leakage as the blue light is filtered out of the system by a combination of the magenta/green filter 1114 and the output analyzing PBS 1108. However, when the red/cyan filter 1112 is replaced by the magenta/green filter in the projection device 1370, the reflected blue light is directed to the red panel 1128. The reflected blue light can adversely affect the performance of the red panel 1128. Thus, the extra trim dichroic filter 1328 is added to filter out the reflected blue. The projection system 1370 can be used for application with any f- number.

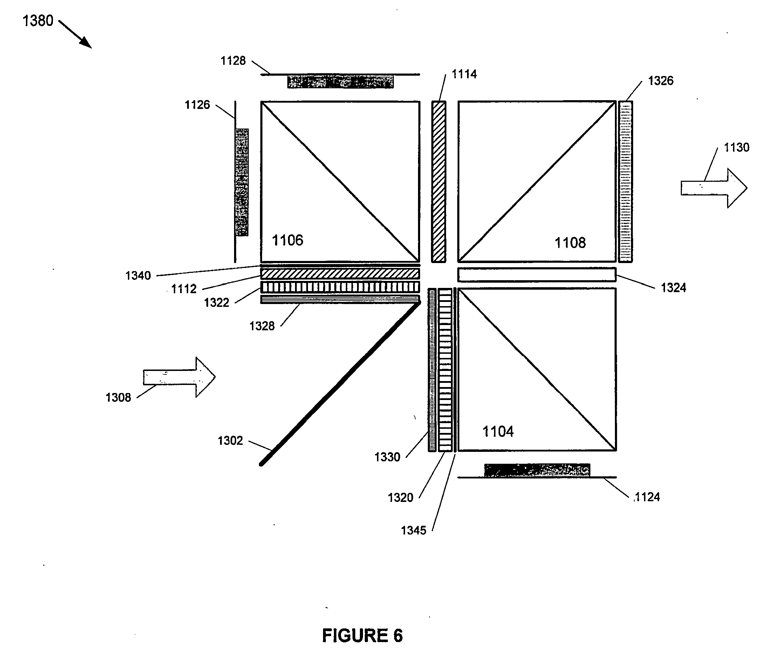

**FIGURE 6** illustrates a projection device 1380, constituting an embodiment of the present invention and which is a variation of the projection device 1350 shown in FIGURE 3. In the present example, the projection device 1380 includes two oblique-plate (o-plate) compensators 1340 and 1345 for skew ray compensation. The contrast of a projection system begins to degrade when the f- number of the application goes below f/2. 5 because there is no compensation for the off-axis geometrical rotation of the polarization axes of the polarizing beam splitters 1106 and 1104. The o-plate compensators 1340 and 1345 are used to compensate for low f-number illumination. The o-plate compensators 1340 and 1345 provide skew ray compensation. The number of o-plate compensators in each channel depends upon the angle of the incident light. Wider angles may require more than one o-plate compensator in each channel, while other systems may demand higher performance in one of the two reflected paths necessitating only one o-plate. In the case of an isolated blue channel, where the dichroic beam splitter 1302 reflects yellow light, the green contrast can be improved by placing an o-plate compensator at the input port of PBS 1106.

In projection systems that use cubes as beam splitting elements, there exists a geometric symmetry that can be solved by a retarder-based compensation scheme. The compensation components are sandwiched between cubes that have reflecting surfaces that are at 45 degrees to the beam propagation direction, and can be parallel or orthogonal. Retarder based compensators between cubes act to transform polarization through rotation or reflection for the parallel or orthogonal reflecting surface situations respectively. In a four-cube system or a five-cube system, retarder stacks are placed between the cubes and can be used as skew ray compensators if they have these transformation properties. In a three-cube system such as projection device 1380, this retarder solution can be implemented for the filters 1114 and 1324, which are situated between adjacent cubes. At the input, where input linear polarization is analyzed by a PBS, o-plates can be used to compensate skew rays.

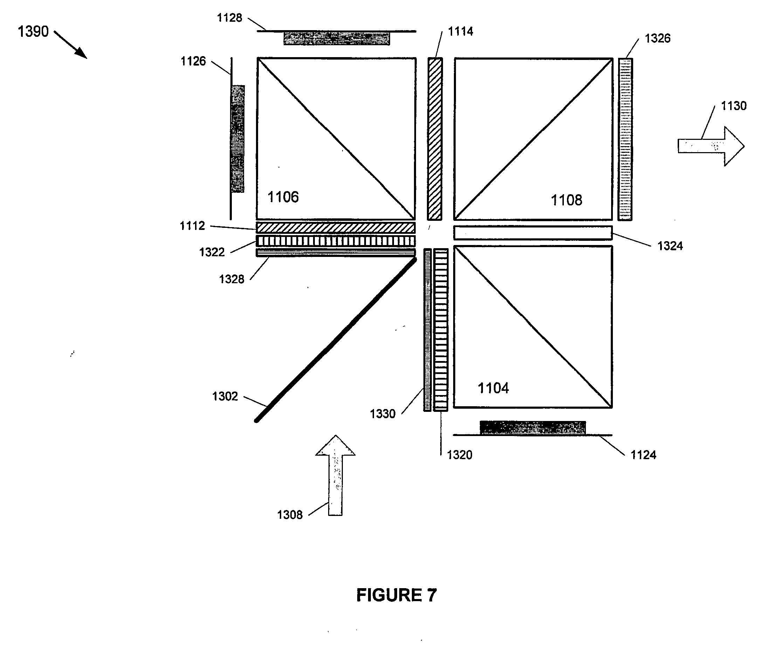

**FIGURE 7** illustrates an exemplary projection system 1390, which is yet another exemplary variation of the projection device 1350 shown in FIGURE 3. In the projection device 1390, the input light 1308 enters the projection device 1390 at 90°. In projection device 1390, the dichroic beam splitter 1302 reflects the blue spectrum and transmits the yellow spectrum. Typically, dichroic beam splitters are better reflectors than transmitters. In the projection device 1390, the dichroic filter 1302 reflects a small portion of yellow spectrum in the blue channel. In the present example, the extra trim dichroic filter 1330 is configured to clean up the blue channel by removing the reflected yellow spectrum. The o- plate compensators 1340 and 1345 can be added to any of the systems shown in FIGURES 2- 7 for skew ray compensation when they would constitute embodiments of the invention.

The embodiments described above provide an efficient means of splitting and recombining color channels while maintaining good polarization and high contrast. These embodiments are configured to achieve very high sequential contrast and enhance other system performance criteria such as:
1. ANSI contrast-by reducing reflection surfaces in the projection path;
2. Soft focus-by reducing non-phase flat components and reflecting surfaces in the projection path;
3. The sequential contrast of a color-by isolating the color channel (e.g., blue);
4. Physical compactness-by introducing a 90 angle between input and output transmission axes;
5. Brightness at high white color temperatures-by increasing blue transmission ; and
6. Durability-by removing the output absorbing sheet polarizer.
Further embodiments may act to improve upon some or all of these performance criteria.

The system performance criteria may be improved at the expense of sequential photopic contrast and component specification. Such improvements may be incorporated since PBS cubes with improved transmission of p-polarized light are commercially available and since sequential contrast may not be limiting when compared with off state color and ANSI contrast.

Exemplary light sources include ultra-high pressure mercury arc lamps with a small arc size such as is available from Ushio, Toshiba, Perkin-Elmer, Phoenix and others. These light sources are rich in green and blue light but are lacking in red light. These or any suitable light source may be used to provide light for the systems discussed above. Additionally, these light sources produce substantial amounts of UV light, which may degrade organic materials such as polycarbonate films. Specific embodiments covered in this patent isolate the blue channel, which is most likely to contain the possibly damaging UV light. In these cases, inorganic half-wave plates such as those made from quartz can be used between PBSs 1104 and 1108 allowing for an organic material free, UV contaminated blue channel. Exemplary embodiments for a reflecting dichroic beam splitter, a yellow transmitting dichroic, a red-cyan filter, a magenta green filter, an output PBS, a blue transmitting dichroic, an input blue polarization rotating filter, a blue PBS, and an output blue polarization filter are listed in the following charts giving typical illumination cone average performances.

| **DICHROIC BEAM SPLITTER** | | | | |
|---|---|---|---|---|
| **Property** | **Typical** | **Range** | **Units** | **Comments** |
| Glass substrate index | 1.52 | 1.5-2.0 | - | BK7. |
| Size | 40x40x1 | N/A | mm | |
| Average reflection of s-polarized blue light (Rs) 430-470nm | 99 | 80-100 | % | Averaged over the input illumination ray set. |
| Average transmission of s-polarized Green light (Ts) 550-570nm | 97 | 95-100 | % | |
| Red Ts 600-680nm | 97 | 95-100 | % | |

| **YELLOW TRIM TRANSMITTING DICHROIC** | | | | |
|---|---|---|---|---|
| **Property** | **Typical** | **Range** | **Units** | **Comments** |
| Blue transmission 430-490nm | 1 | 0-2 | % | |
| Green transmission 530-600nm | 96 | 94-100 | % | |
| Red transmission 600-680nm | 97 | 95 - 100 | % | |
| 50% transmission | 515 | 505-525 | nm | |

| **RED CYAN FILTER** | | | | |
|---|---|---|---|---|
| **Property** | **Typical** | **Range** | **Units** | **Comments** |
| Blue Crossed polarizer-transmission 430-480nm (Bx) | <2 | <10 | % | Not critical |
| Gx (530-560nm) | 0.5 | 0-0.7 | % | |
| Rx (615-680nm) | 98.5 | 97-100 | % | |
| Blue parallel-polarizer transmission (Bp) | >95 | >90% | % | Not critical |
| Gp | 98 | 96-100 | % | |
| Rp | 98 | 96-100 | % | |
| | | | | |
| Yellow 50% point | 600 | 595-605 | nm | |
| General Comments | This may be a free-standing part with anti-reflective coatings evaporated directly onto the polycarbonate. | | | |

| **RED GREEN PBS** | | | | |
|---|---|---|---|---|
| **Property** | **Typical** | **Range** | **Units** | **Comments** |
| Glass index | 1.85 (e.g., PBH56) | 1.5-2.0 | - | A low coefficient of optical elasticity reduces stress induced birefringence. |
| Size | 22x22x28 | N/A | mm | |
| Blue Tp 430-520nm | 90 | 80-100 | % | Not critical |
| Yellow Tp 530-680nm | 96 | 94-100 | % | |
| Blue Ts | 1 | <2 | % | Not critical |
| Yellow Ts 530-680nm | 0.1 | <0.2 | % | |
| External surfaces | Input and panels ports may be antireflective coated for <0.5% reflection over the visible spectrum. | | | |

| **MAGNETA GREEN FILTER** | | | | |
|---|---|---|---|---|
| **Property** | **Typical** | **Range** | **Units** | **Comments** |
| Blue Crossed polarizer-transmission 430-480nm (Bx) | Don't care (D/C) | D/C | | |
| Gx (530-560nm) | 1 | 0-2 | % | |
| Rx (615-680nm) | 98 | 97-99 | % | |
| Blue parallel-polarizer transmission (Bp) | D/C | D/C | | |
| Gp | 97 | 96-99 | % | |
| Rp | 0.25 | 0-0.5 | % | |
| Cyan 50% point | 520 | <530 | nm | |
| Yellow 50% point | 570 | 565-575 | nm | |
| General Comments | This filter may be bonded between glass substrates with conforming glue, such as silicone, and then the glass is bonded to the adjacent PBSs to avoid reflections. Skew ray compensating. | | | |

| **OUTPUT PBS** | | | | |
|---|---|---|---|---|
| **Property** | **Typical** | **Range** | **Units** | **Comments** |
| Glass index | 1.65 (SF2) | 1.5-2.0 | - | |
| Size | 27x27x34 | N/A | mm | |
| Blue Tp 430-500nm | D/C | D/C | % | |
| Green Tp 500-600nm | 90 | 85-97 | % | |
| Red Tp 600-680nm | 90 | 85-98 | % | |
| Blue Ts | 0.1% | 0-0.2 | % | |
| Yellow Ts 500-680nm | D/C | | | |

| **BLUE TRIM TRANSMITTING DICHROIC** | | | | |
|---|---|---|---|---|
| **Property** | **Typical** | **Range** | **Units** | **Comments** |
| Blue transmission 430-480nm | 97 | 96-99 | % | |
| Yellow transmission 510-680nm | 0.5 | 0-1 | % | |
| 50% transmission | 485 | 480-490 | nm | |

| **BLUE PBS** | | | | |
|---|---|---|---|---|
| **Property** | **Typical** | **Range** | **Units** | **Comments** |
| Glass index | 1.85 (e.g., PBH56) | 1.5-2.0 | - | A low coefficient of optical elasticity reduces stress induced birefringence. |
| Size | 22x22x28 | N/A | mm | |
| Blue Tp 430-520nm | 95 | >93 | % | |
| Yellow Tp 520-680nm | D/C | | | |
| Blue Ts | 0.3 | <0.5 | % | |
| Yellow Ts 520-680nm | D/C | | | |
| External surfaces | Input and panels ports may be antireflective coated for <0.5% reflection over the visible spectrum. | | | |

| **OUTPUT BLUE POLARIZATION ROTATING FILTER** | | | | |
|---|---|---|---|---|
| **Property** | **Typical** | **Range** | **Units** | **Comments** |
| Blue parallel polarizer -transmission 430-470nm (Bp) | 1 | <2 | % | |
| Blue crossed-polarizer transmission (Bx) | 97 | >95 | % | |
| Yp (540-680) | 97 | 95-100 | % | |
| Yx | 2 | 0-4 | % | |

Although the exemplary embodiments described herein may be described in reference to specific colors or combinations of colors, it should be understood that other color combinations are also possible. For example, the color filters can be any combination of colors including Red/Blue, Blue/Green, Red/Green, an additive primary and its complementary subtractive primary or any other color pair as system criteria dictate.

As used herein, rotation is not limited to a pure optical rotation but also includes any transformation that results in optical transformation or other effects that result in apparent optical rotation. For example, a half-wave plate at 45° can transform a linear state into an orthogonal linear state via retardation but not through rotation.

Although several embodiments and its advantages have been described in detail, it should be understood that changes, substitutions, transformations, modifications, variations, permutations and alterations may be made therein without departing from the teachings of the present application, the spirit and the scope of the invention being set forth by the appended claims. Further, the reference in this application to "Invention" in the singular should not be used to argue that there is a single point of novelty claimed in this application. Multiple inventions may be set forth according to the limitations of the multiple claims associated with this patent specification, and the claims accordingly define the invention(s) that are protected thereby. In all instances, the scope of the claims shall be considered on their own merits in light of the specification but should not be constrained by the reference to "Invention" included in this application.

Realizations in accordance with the present invention have been described in the context of particular embodiments. These embodiments are meant to be illustrative and not limiting. Many variations, modifications, additions, and improvements are possible.
Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the exemplary configurations may be implemented as a combined structure or component. These and other variations, modifications, additions, and improvements may fall within the scope of the invention as defined in the claims that follow.

## Claims

1. A colour management architecture, comprising:
an input dichroic beam splitting element (1302) configured to split an input light into a first portion and a second portion;
a first light directing element (1104) configured to receive light of the first portion from the input dichroic beam splitting element;
a first reflective panel (1124) adjacent to the first light directing element and configured to modulate and reflect light of the first portion;
a second light directing element (1106) configured to split light of the second portion into a third portion and a fourth portion;
a second reflective panel (1128) adjacent to the second light directing element and configured to modulate and reflect light of the third portion;
a third reflective panel (1126) adjacent to the second light directing element and configured to modulate and reflect light of the fourth portion;
a third light directing element (1108) adjacent to the first and second light directing elements and configured to combine modulated and reflected light of the first, third, and fourth portions to form an output light;
a first polarizing element (1320) optically between the input dichroic beam splitting element and the first light directing element; and
a second polarizing element (1322) optically between the input dichroic beam splitting element and the second light directing element, **characterised by** a first oblique-plate compensator (1340) optically between the input dichroic beam splitting element and the first light directing element and configured to compensate the light of the first portion for skew rays; and
a second oblique-plate compensator (1345) optically between the input dichroic beam splitting element and the second light directing element and configured to compensate the light of the second portion for skew rays.

2. A colour management architecture according to claim 1, further comprising:
a first dichroic filter optically between the input dichroic beam splitting element and the first light directing element and configured to transmit light of the first portion; and
a second dichroic filter optically between the input dichroic beam splitting element and the second light directing element and configured to transmit light of the second portion.

3. A colour management architecture according to claim 1 or 2, further comprising:
a first polarization rotation element optically between the input dichroic beam splitting element and the second light directing element and configured to rotate a portion of the wavelength spectrum of the second portion; and
a second polarization rotation element optically between the second light directing element and the third light directing element and configured to rotate the lights of at least one of the third and fourth portions.

4. A colour management architecture according to claim 3, **characterised in that** the first polarization rotation element is selected from the group consisting of a magenta/green filter (1114) and a red/cyan filter (1112); and
the second polarization rotation element is further configured to compensate the modulated and reflected lights of at least one of the third and fourth portions for skew rays.

5. A colour management architecture according to claim 1, **characterised by** further comprising:
at least one skew ray compensator optically positioned and configured to compensate the lights of at least one of the first, second, third, and fourth portions.

6. A colour management architecture according to claim 5, **characterised by** wherein the at least one skew ray compensator is an oblique-plate skew ray compensator.

7. A colour management architecture according to claim 5, **characterised by** further comprising:
a first oblique-plate skew ray compensator optically between the input dichroic beam splitting element and the first polarizing beam splitter; and
a second oblique-plate skew ray compensator optically between the input dichroic beam splitting element and the second polarizing beam splitter.

8. A method of projecting light through an aggregate structure for colour management, the method comprising:
splitting a substantially white input light into a first portion light substantially of a first primary colour and a second portion light substantially of a second and third primary colour with a dichroic beam splitter (1302), wherein the first portion light has a path substantially perpendicular to a path of the second portion light directing the first light portion through a first polarising element (1320);
directing the first portion light through a first polarising element (1320);
directing the second portion light through a second polarising element (1322) compensating the first portion light with a first oblique plate compensator;
compensating the second portion light with a second oblique plate compensator;
directing the first portion light to a first panel (1124) with a first polarizing beam splitter (1104) located proximate to the dichroic beam splitter, the first panel located adjacent to the first polarizing beam splitter for modulating and reflecting the first portion light;
splitting the second portion light into a third portion light of the second primary colour and a fourth portion light of the third primary colour with a second polarizing beam splitter (1106) located proximate the dichroic beam splitter, wherein the third portion light has a path substantially perpendicular to a path of the fourth portion light;
directing the third portion light to a second panel (1128) with the second polarizing beam splitter, the second panel located adjacent to the second polarizing beam splitter and opposite the dichroic beam splitter for modulating and reflecting the third portion of light;
directing the fourth portion light to a third panel (1126) with the second polarizing beam splitter, wherein the third panel is located adjacent to the second polarizing beam splitter and located on a side of the aggregate structure not including the first or second panels, the third panel modulating and reflecting the fourth portion light;
combining the modulated and reflected third portion light and fourth portion light with the second polarizing beam splitter to form a fifth portion light;
combining the modulated and reflected first portion light with the fifth portion of light using a third polarizing beam splitter (1108) to form an output light, the third polarizing beam splitter located adjacent to the first and second polarizing beam splitters; and
outputting the output light from the third polarizing beam splitter on a side of the aggregate structure not having the first, second, or third panels.

9. A method according to claim 8, **characterised by** further comprising:
compensating light of the fifth portion before combining the modulated and reflected first portion of light with the fifth portion of light.

10. A method according to claim 8, wherein the light of the fifth portion is compensated using a polarization rotation element.

## Patentansprüche

1. Farbmanagement-Architektur, umfassend:
ein dichroitisches Eingangsstrahlteilungselement (1302), das so konfiguriert ist, dass es Eingangslicht in einen ersten Teil und einen zweiten Teil aufteilt;
ein erstes Lichtlenkelement (1104), das so konfiguriert ist, dass es Licht des ersten Teils vom dichroitischen Eingangslichtstrahlteilungselements empfängt;
eine erste reflektierende Platte (1124) neben dem ersten Lichtlenkelement, die so konfiguriert ist, dass sie Licht des ersten Teils moduliert und reflektiert;
ein zweites Lichtlenkelement (1106), das so konfiguriert ist, dass es Licht des zweiten Teils in einen dritten Teil und einen vierten Teil aufteilt;
eine zweite reflektierende Platte (1128) neben dem zweiten Lichtlenkelement, die so konfiguriert ist, dass sie Licht des dritten Teils moduliert und reflektiert;
eine dritte reflektierende Platte (1126) neben dem zweiten Lichtlenkelement, die so konfiguriert ist, dass sie Licht des vierten Teils moduliert und reflektiert;
ein drittes Lichtlenkelement (1108), das sich neben dem ersten und dem zweiten Lichtlenkelement befindet und so konfiguriert ist, dass es moduliertes und reflektiertes Licht des ersten, dritten und vierten Teils kombiniert, um Ausgangslicht zu bilden;
ein erstes polarisierendes Element (1320), das sich optisch zwischen dem dichroitischen Eingangstrahlteilungslement und dem ersten Lichtlenkelement befindet; und
ein zweites polarisierendes Element (1322), das sich optisch zwischen dem dichroitischen Eingangsstrahlteilungselement und dem zweiten Lichtlenkelement befindet, **gekennzeichnet durch** einen ersten Schrägplatten-Kompensator (1340), der sich optisch zwischen dem dichroitischen Eingangsstrahlteilungselement und dem ersten Lichtlenkelement befindet und so konfiguriert ist, dass er das Licht des ersten Teils für schräge Strahlen ausgleicht; und
einen zweiten Schrägplatten-Kompensator (1345), der sich optisch zwischen dem dichroitischen Eingangsstrahlteilungselement und dem zweiten Lichtlenkelement befindet und so konfiguriert ist, dass er das Licht des zweiten Teils für schräge Strahlen ausgleicht.

2. Farbmanagement-Architektur gemäß Anspruch 1, weiterhin umfassend:
einen ersten dichroitischen Filter, der sich optisch zwischen dem dichroitischen Eingangsstrahlteilungselement und dem ersten Lichtlenkelement befindet und so konfiguriert ist, dass er Licht des ersten Teils durchlässt; und
einen zweiten dichroitischen Filter, der sich optisch zwischen dem dichroitischen Eingangsstrahlteilungselement und dem zweiten Lichtlenkelement befindet und so konfiguriert ist, dass er Licht des zweiten Teils durchlässt.

3. Farbmanagement-Architektur gemäß Anspruch 1 oder 2, weiterhin umfassend:
ein erstes Polarisierungsdrehungselement, das sich optisch zwischen dem dichroitischen Eingangsstrahlteilungselement und dem zweiten Lichtlenkelement befindet und so konfiguriert ist, dass es einen Teil des Wellenlängenspektrums des zweiten Teils rotiert; und
ein zweites Polarisierungsdrehungselement, das sich optisch zwischen dem zweiten Lichtlenkelement und dem dritten Lichtlenkelement befindet und so konfiguriert ist, dass es das Licht von mindestens einem des dritten oder des vierten Teils rotiert.

4. Farbmanagement-Architektur gemäß Anspruch 3, **dadurch gekennzeichnet, dass** das erste Polarisationsdrehungselement aus der Gruppe ausgewählt wird, die aus einem Magenta/Grün-Filter (1114) und einem Rot/Cyan-Filter (1112) besteht; und
dass das zweite Polarisationsdrehungselement des Weiteren so konfiguriert ist, dass es das modulierte und reflektierte Licht von mindestens einem des dritten und vierten Teils für schräge Strahlen ausgleicht.

5. Farbmanagement-Architektur gemäß Anspruch 1, **dadurch gekennzeichnet, dass** es weiterhin Folgendes umfasst:
mindestens einen Schrägstrahl-Kompensator, der optisch so positioniert und konfiguriert ist, dass er das Licht von mindestens einem des ersten, zweiten, dritten und vierten Teils ausgleicht.

6. Farbmanagement-Architektur gemäß Anspruch 5, **dadurch gekennzeichnet, dass** der mindestens eine Schrägstrahl-Kompensator ein Schrägplatten-Schrägstrahl-Kompensator ist.

7. Farbmanagement-Architektur gemäß Anspruch 5, **dadurch gekennzeichnet, dass** sie weiterhin Folgendes umfasst:
einen ersten Schrägplatten-Schrägstrahl-Kompensator, der sich optisch zwischen dem dichroitischen Eingangsstrahlteilungselement und dem ersten polarisierenden Strahlteiler befindet; und
einen zweiten Schrägplatten-Schrägstrahl-Kompensator, der sich optisch zwischen dem dichroitischen Eingangsstrahlteilungselement und dem zweiten polarisierenden Strahlteiler befindet.

8. Verfahren zur Projektion von Licht durch eine Aggregatstruktur zum Farbmanagement, wobei das Verfahren Folgendes umfasst:
Teilung eines im Wesentlichen weißen Eingangslichts in einen ersten Lichtteil von im Wesentlichen einer ersten Primärfarbe und einen zweiten Lichtteil von im Wesentlichen einer zweiten und dritten Primärfarbe mit einem dichroitischen Strahlteiler (1302), wobei der erste Lichtteil einen Pfad aufweist, der im Wesentlichen rechtwinklig zum Pfad des zweiten Lichtteils verläuft, welcher den ersten Lichtteil durch ein erstes polarisierendes Element lenkt (1320);
Lenkung des ersten Lichtteils durch ein erstes polarisierendes Element (1320);
Lenkung des zweiten Lichtteils durch ein zweites polarisierendes Element (1322);
Ausgleich des ersten Lichtteils mit einem ersten Schrägplatten-Kompensator;
Ausgleich des zweiten Lichtteils mit einem zweiten Schrägplatten-Kompensator;
Lenkung des ersten Lichtteils zu einer ersten Platte (1124) mit einem ersten polarisierenden Strahlteiler (1104), der sich neben dem dichroitischen Strahlteiler befindet, wobei sich die erste Platte neben dem ersten polarisierenden Strahlteiler zur Modulation und Reflexion des ersten Lichtteils befindet;
Teilung des zweiten Lichtteils in einen dritten Lichtteil der zweiten Primärfarbe und einen vierten Lichtteil der dritten Primärfarbe mit einem zweiten polarisierenden Strahlteiler (1106), der sich neben dem dichroitischen Strahlteiler befindet, wobei der dritte Lichtteil einen Pfad aufweist, der im Wesentlichen rechtwinklig zum Pfad eines vierten Lichtteils verläuft;
Lenkung des dritten Lichtteils zu einer zweiten Platte (1128) mit dem zweiten polarisierenden Strahlteiler, wobei sich die zweite Platte neben dem zweiten polarisierenden Strahlteiler und gegenüber des dichroitischen Strahlteilers zur Modulation und Reflexion des dritten Lichtteils befindet;
Lenkung des vierten Lichtteils an eine dritte Platte (1126) mit dem zweiten polarisierenden Strahlteiler, wobei sich die dritte Platte neben dem zweiten polarisierenden Strahlteiler und an einer Seite der Aggregatstruktur befindet, die die erste oder zweite Platte nicht beinhaltet, wobei die dritte Platte den vierten Lichtteil moduliert und reflektiert;
Kombination des modulierten und reflektierten dritten Lichtteils und vierten Lichtteils mit dem zweiten polarisierenden Strahlteiler, um einen fünften Lichtteil zu bilden;
Kombination des modulierten und reflektierten ersten Lichtteils mit dem fünften Lichtteil mit Hilfe eines dritten polarisierenden Strahlteilers (1108), um ein Ausgangslicht zu bilden, wobei sich der dritte polarisierende Strahlteiler neben dem ersten und dem zweiten polarisierenden Strahlteiler befindet; und
Ausgabe des Ausgangslichts vom dritten polarisierenden Strahlteiler auf einer Seite der Aggregatstruktur, die die erste, zweite oder dritte Platte nicht beinhaltet.

9. Verfahren gemäß Anspruch 8, **dadurch gekennzeichnet, dass** es weiterhin Folgendes umfasst:
Ausgleich des Lichts des fünften Teils vor der Kombination des modulierten und reflektierten ersten Lichtteils mit dem fünften Lichtteil.

10. Verfahren gemäß Anspruch 8, wobei das Licht des fünften Teils mit Hilfe eines Polarisiemngsdrehungselements ausgeglichen wird.

## Revendications

1. Une architecture de gestion des couleurs, comprenant :
un séparateur de faisceau dichroïque d'entrée (1302) configuré pour scinder une lumière d'entrée en une première partie et une deuxième partie ;
un premier élément directeur de lumière (1104) configuré pour recevoir la lumière de la première partie du séparateur de faisceau dichroïque d'entrée ;
un premier panneau réfléchissant (1124) adjacent au premier élément directeur de lumière et configuré pour moduler et réfléchir la lumière de la première partie ;
un deuxième élément directeur de lumière (1106) configuré pour scinder la lumière de la seconde partie en une troisième et une quatrième parties ;
un deuxième panneau réfléchissant (1128) adjacent au deuxième élément directeur de lumière et configuré pour moduler et réfléchir la lumière de la troisième partie ;
un troisième panneau réfléchissant (1126) adjacent au deuxième élément directeur de lumière et configuré pour moduler et réfléchir la lumière de la quatrième partie ;
un troisième élément directeur de lumière (1108) adjacent au premier et au deuxième éléments directeurs de lumière et configuré pour combiner la lumière modulée et réfléchie des première, troisième et quatrième parties pour former une lumière de sortie ;
un premier élément polarisant (1320) par voie optique entre le séparateur de faisceau dichroïque d'entrée et le premier élément directeur de lumière ; et
un deuxième élément polarisant (1322) par voie optique entre le séparateur de faisceau dichroïque d'entrée et le deuxième élément directeur de lumière, **caractérisé par** un premier compensateur à plaque oblique (1340) par voie optique entre le séparateur de faisceau dichroïque d'entrée et le premier élément directeur de lumière et configuré pour compenser la lumière de la première partie pour les rayons obliques ; et
un deuxième compensateur à plaque oblique (1345) par voie optique entre le séparateur de faisceau dichroïque d'entrée et le deuxième élément directeur de lumière et configuré pour compenser la lumière de la deuxième partie pour les rayons obliques.

2. Une architecture de gestion des couleurs conformément à la revendication 1, comprenant en plus :
un premier filtre dichroïque par voie optique entre le séparateur de faisceau dichroïque d'entrée et le premier élément directeur de lumière, et configuré pour transmettre la lumière de la première partie ; et
un deuxième filtre dichroïque par voie optique entre le séparateur de faisceau dichroïque d'entrée et le deuxième élément directeur de lumière, et configuré pour transmettre la lumière de la deuxième partie.

3. Une architecture de gestion des couleurs conformément à la revendication 1 ou 2, comprenant en plus :
un premier élément de rotation de polarisation par voie optique entre le séparateur de faisceau dichroïque d'entrée et le deuxième élément directeur de lumière, et configuré pour faire tourner une partie du spectre de longueurs d'onde de la deuxième partie ; et
un deuxième élément de rotation de polarisation par voie optique entre le deuxième séparateur de faisceau dichroïque d'entrée et le troisième élément directeur de lumière, et configuré pour faire tourner les lumières d'une au moins des troisième et quatrième parties.

4. Une architecture de gestion des couleurs conformément à la revendication 3, **caractérisée par le fait que** le premier élément de rotation de polarisation est sélectionné à partir du groupe comprenant un filtre magenta/vert (1114) et un filtre rouge/cyan (1112) ; et
le deuxième élément de rotation de polarisation est également configuré pour compenser les lumières modulée et réfléchie de la troisième ou la quatrième partie minimum, pour les rayons obliques.

5. Une architecture de gestion des couleurs conformément à la revendication 1, **caractérisée** comme comprenant en plus :
au moins un compensateur de rayons obliques positionné et configuré optiquement pour compenser les lumières des première, deuxième, troisième et quatrième parties au minimum.

6. Une architecture de gestion des couleurs conformément à la revendication 5, **caractérisée par le fait qu'**au moins un compensateur de rayons obliques est un compensateur de rayons obliques à plaque oblique.

7. Une architecture de gestion des couleurs conformément à la revendication 5, **caractérisée** comme comprenant en plus :
un premier compensateur de rayons obliques à plaque oblique par voie optique entre le séparateur de faisceau dichroïque d'entrée et le premier séparateur de faisceau polarisant ; et
un deuxième compensateur de rayons obliques à plaque oblique par voie optique entre le séparateur de faisceau dichroïque d'entrée et le deuxième séparateur de faisceau polarisant.

8. Une méthode de projection de la lumière par une structure agrégée pour la gestion des couleurs, comprenant :
la séparation d'une lumière d'entrée substantiellement blanche en une première partie de lumière substantiellement d'une première couleur primaire et une deuxième partie de lumière substantiellement d'une deuxième et troisième couleurs primaires avec un séparateur de faisceau dichroïque (1302), où la première partie de couleur a une trajectoire substantiellement perpendiculaire à celle de la deuxième partie de lumière dirigeant la première partie de lumière à travers un premier élément polarisant (1320) ;
dirigeant la première partie de lumière à travers un premier élément polarisant (1320) ;
dirigeant la deuxième partie de lumière à travers un deuxième élément polarisant (1322) ;
compensant la première partie de lumière avec un premier compensateur à plaque oblique ;
compensant la deuxième partie de lumière avec un deuxième compensateur à plaque oblique ;
dirigeant la première partie de lumière jusqu'à un premier panneau (1124) avec un premier séparateur de faisceau polarisant (1104) situé près du séparateur de faisceau dichroïque, le premier panneau étant adjacent au premier séparateur de faisceau polarisant pour moduler et réfléchir la première partie de lumière ;
scindant la deuxième partie de lumière en une troisième partie de seconde couleur primaire et une quatrième partie de troisième couleur primaire avec un deuxième séparateur de faisceau polarisant (1106) situé près du séparateur de faisceau dichroïque, où la troisième partie de couleur a une trajectoire substantiellement perpendiculaire à la trajectoire de la quatrième partie de lumière ;
dirigeant la troisième partie de lumière vers un deuxième panneau (1128) avec le deuxième séparateur de faisceau polarisant, le deuxième panneau étant adjacent au deuxième séparateur de faisceau polarisant et à l'opposé du séparateur de faisceau dichroïque pour moduler et réfléchir la troisième partie de lumière ;
dirigeant la quatrième partie de lumière vers un troisième panneau (1126) avec le deuxième séparateur de faisceau polarisant, le troisième panneau étant adjacent au deuxième séparateur de faisceau polarisant et sur un côté de la structure agrégée sans inclure le premier et deuxième panneaux, le troisième panneau modulant et réfléchissant la quatrième partie de lumière ;
combinant la troisième et la quatrième parties de lumière modulées et réfléchies au deuxième séparateur de faisceau polarisant pour former une cinquième partie de lumière ;
combinant la première partie de lumière modulée et réfléchie à la cinquième partie de lumière en utilisant un troisième séparateur de faisceau polarisant (1108) pour former une lumière de sortie, le troisième séparateur de faisceau polarisant étant aux premier et deuxième séparateurs de faisceau polarisants ; et
produisant la lumière de sortie à partir du troisième séparateur de faisceau polarisant sur un côté de la structure agrégée sans inclure le premier, le deuxième et le troisième panneaux.

9. Une méthode conformément à la revendication 8, **caractérisée** comme comprenant en plus :
la compensation de la lumière de la cinquième partie avant de combiner la première partie de lumière modulée et réfléchie à la cinquième partie de lumière.

10. Une méthode conformément à la revendication 8, où la lumière d ela cinquième partie est compensée par un élément de rotation de polarisation.
